Europäisches Patentamt

European Patent Office

Office européen des brevets

(11) Publication number: **0 166 488**
**A2**

## EUROPEAN PATENT APPLICATION

(21) Application number: **85200978.6**

(22) Date of filing: **08.03.82**

(51) Int. Cl.⁴: **B 01 D 53/04**

(30) Priority: **09.03.81 SE 8101469**

(43) Date of publication of application: **02.01.86**
**Bulletin 86/1**

(84) Designated Contracting States: **BE DE FR GB NL**

(60) Publication number of the earlier application in accordance with Art. 76 EPC: **0073789**

(71) Applicant: **Bycosin AB, Sägverksgatan 7, S-652 21 Karlstad (SE)**

(72) Inventor: **Holm, Anders, Trumberget 6, S-663 00 Skoghall (SE)**

(74) Representative: **Burman, Tore et al, Bergling & Sundbergh AB P.O. Box 7645, S-103 94 Stockholm (SE)**

(54) **Apparatus for recovering solvent from exhaust air.**

(57)     Solvent contained in an air stream is adsorbed in a bed (11) of active carbon in a container through which the air stream passes. The solvent in the bed is desorbed by leading steam through the bed in counterflow to the through-air stream. The steam is led in via a pressure-withstanding, perforated vessel arranged in the bottom zone of the container. Desorbed solvent vapor and possible water vapor is condensed in cooling means, while the air outlet (32) of the container (4) is kept closed. During the adsorbing phase, the air stream is cooled with the aid of the cooling means (15) immediately before introduction into the carbon bed (11). During the desorbing phase, the desorbed solvent vapor and possible water vapor is condensed with the aid of the cooling means, the condensate being collected in a receptacle (8) arranged under the cooling means (15), preferably while the air intake conduit (37) of the container (4) is kept open. The condensate is taken away from the receptacle (8) via a waste pipe (9) to means (10) for separating solvent from water. Separated water is refluxed to the interior of the container (4), where water may be further liberated from solvent by contact with the steam.

TITLE OF INVENTION
  Apparatus for Recovering Solvent from Exhaust Air.

TECHNICAL FIELD
  The invention relates to an apparatus for recovering solvent entrained in an air stream, including a container with an inlet and an outlet for the air stream, the container being provided with a bed of active carbon, and with an inlet for taking in .steam through the bed in conterflow to the through-airflow for desorbing the solvent, cooling means connected to the air inlet side of the container for condensing desorbed solvent vapor and steam, and a closure valve for closing the air outlet of the container during the desorbing phase,

BACKGROUND ART
  In conventional carbon filter containers (US-A-2 760 594), the carbon bed is carried by a strainer plate resting on the container bottom. Steam for desorbing solvent from the carbon is introduced into the distribution space under the plate. The perforations in the plate must be small so that carbon particles are not able to flow downwards and fill the distribution space. Since the whole weight of the carbon bed rests against the plate, the perforations tend to be blocked up by carbon particles, impurities and possibly also limestone which accompanies the steam and is deposited on the plate. If the perforations in the plate are blocked up, steam can exert pressure against the container. The container must therefore be made as a pressure vessel, which is an economically burdening factor, particularly with large carbon filter vessels, e.g. with a volume of some cubic meters.
  The desorbed solvent together with possible water vapor is condensed in a cooling unit, from which the condensate is removed. The condensate contains both water and solvent, and the quantities thereof can be relatively large, later, on requiring an extensive process for separating
solvent from water, partly to enable using the solvent
again and partly to enable discharging the water, or using
it again. Conventional carbon filter apparatus does not
offer any solution to this problem.

OBJECTS

One object of the invention is to propose an apparatus affording extensive separation of the solvent and
water from the condensate formed at a cooling unit during
the desorbing phase.

A further object is to propose apparatus affording
increased absorption capacity of the active carbon.

SUMMARY OF THE INVENTION

The invention is based on apparatus for regaining
solvent entrained in an air stream, said apparatus including a container provided with a bed of active carbon and
having an inlet and an outlet for the air stream, it being
also provided with an inlet for taking water vapor through
the bed in counterflow to the through-air stream for desorbing the solvent, cooling means connected to the air
inlet side of the container for condensing desorbed solvent
vapor steam, and a closing valve for closing the air outlet
of the container during the desorbing phase. Against this
background the apparatus is distinguished in that the cooling means for condensing desorbed solvent and steam, is
arranged in the air inlet ducting of the apparatus upstreams
of the carbon bed, and that the cooling means comprises a
cooling coil which is arranged above a condensate collection receptacle to which a conduit is connected for discharging condensate to a separation means for separating
solvent from water. The steam inlet can be connected to a
perforated vessel formed to withstand pressure, said vessel
being placed in the bottom zone of the container and embedded in the carbon bed. If the perforations in the vessel were
to be blocked, the steam pressure would be exercised against
the vessel and thus the container will not be subjected to
steam pressure.

The perforations in the vessel are preferably arranged substantially on the parts thereof facing towards the bottom of the container. In the case where the container is formed as a lying cylinder, the vessel can comprise a pipe with closed-off ends, and extending parallel to the axis of the container, the pipe being preferably exchangeably mounted in the container. To advantage, the vessel can also form the outlet conduit for air purified in the apparatus. The cooling means is preferably placed inside the container in the upper zone thereof. To advantage, the cooling means is adapted for cooling an incoming air stream during the desorbing phase, immediately before the air stream is taken through the carbon bed. The cooling means is also arranged to condense solvent vapor and steam during the desorbing phase, preferably while the air intake conduit of the container is kept open. A condensate collection receptacle is arranged for the cooling means, and is drained via an outlet conduit, which may to advantage be connected to means for separating solvent from water. The water separated in the separating means can to advantage be recycled to the interior of the container, in order to be collected temporarily, preferably in a lower zone thereof. Thus, vapor flowing out from the perforations in the vessel will flow through or at least act on the water in the lower part of the container so that solvent residue therein is vaporized for absorption in the carbon or condensation in the cooling means.

Two apparatuses in accordance with the invention may be connected in tandem, as known in the art. This means that two apparatuses are connected in parallel, at least such that the air inlet conduits of the parallel-connected containers are in mutual, direct and open communication, fans for driving the air stream being upstream of the branch lines to the respective containers. When one apparatus has been saturated with solvent, this situation may be sensed by means of sensing means in the exhaust air conduit from the loaded container. When desorption of the loaded bed is thus required, the air outlet from the

bed in question is closed and steam is led in counter to the through-air stream. The air outlet conduit from the other apparatus is opened in this situation, so that the solvent - contaminated air urged on by the fan means automatically finds its way through the other container. In the container which is then being subjected to desorbtion, the steam will press out air with its entrained solvent which has not managed to be absorbed in the bed, and this solvent - contaminated quantity of air will then quite simply be urged over to an apparatus which has just been put to use for cleaning the exhaust air flow. There is thus avoided removal of solvent-containing air via the condensate discharge conduit connected to the cooling means and possible separating means further along the line. It will be further seen that tandem connection of inventive apparatus signifies that their air intakes are not kept closed. This means that the steam taken in through one container cannot be pressurized to any damaging degree.

In the following, the invention will be described in detail in the form of a non-restricting embodiment, while referring to the attached drawing.

DRAWING

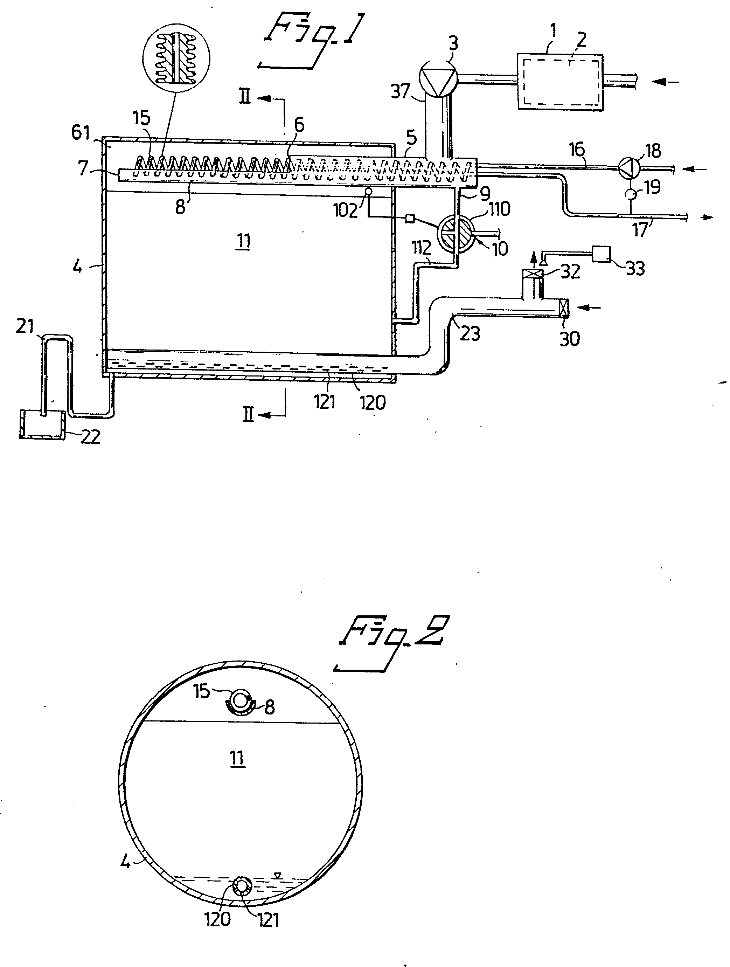

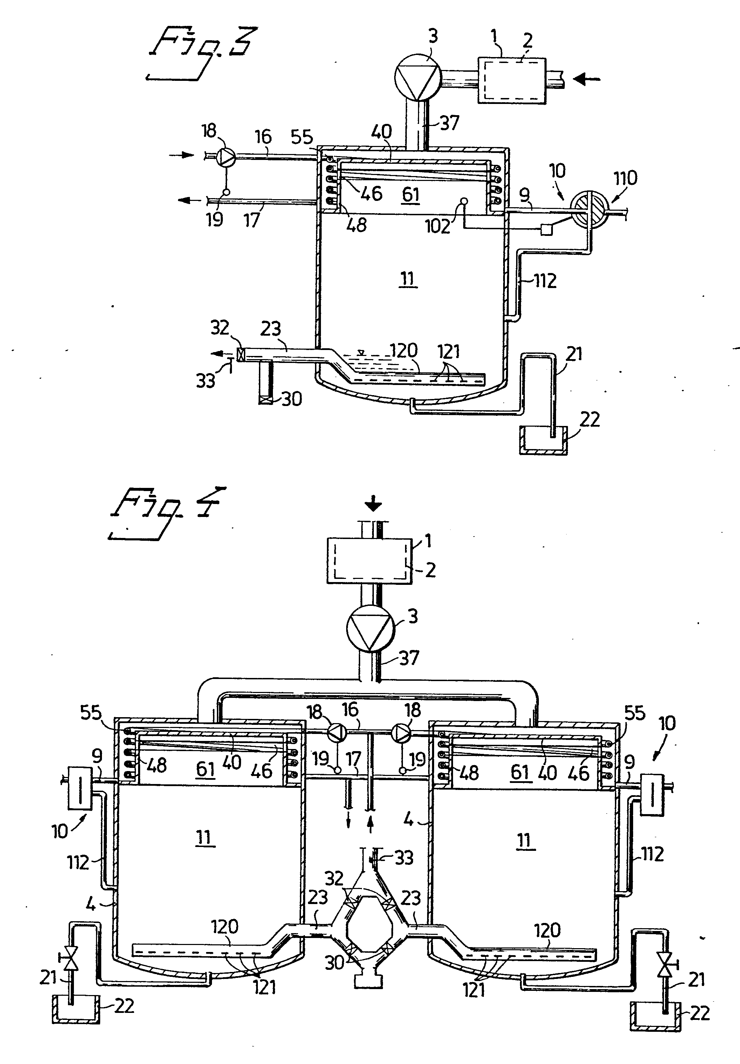

Fig. 1 is an axial, schematic section through a first embodiment of an apparatus in accordance with the invention. Fig. 2 is a section along the line II-II in Fig. 1. Fig. 3 illustrates another embodiment of an apparatus in accordance with the invention, and Fig. 4 schematically illustrates tandem connection of two apparatuses according to Fig. 3.

EMBODIMENT

Fig. 1 illustrates a cylindrical container 4 with an inlet pipe 5 for solvent-contaminated exhaust air, e.g. from a trichlorethylene degreasing apparatus. The air stream is taken in via a bag filter 2, arranged in a filter container 1, which is connected to a fan 3 communicating with an inlet pipe 5 extending into the upper zone of the container 4.

The container 4 is provided with a carbon bed 11, an upper distribution zone 61 being left between the upper surface of the carbon bed 1 and the upper limiting wall of the container 4. The inlet pipe 5 extends axially, in respect of the container, in the distribution zone 61 along the greater part of its length. The upper half of the inlet pipe 5 is cut away at the inner end portion of the pipe, and an end wall 7 is attached to the inner end of the pipe 4 so that the lower portion of the pipe 5 forms a trough 8. A helical pipe coil 15, with an outside diameter less than the inside diameter of the pipe 5, extends along substantially the whole length of the pipe 5. To advantage, the coil 15 can comprise a gilled pipe. The coil 15 is connected to an inlet conduit 16 for cooling water and to an outlet conduit 17 for removing heated cooling water. A pump 18 may be arranged in the conduit 16, and a sensing means 19 may be adapted in the outlet pipe 17 to sense the temperature of the return flow, and for controlling the pump 18 so that the temperature in the outlet conduit 17 is kept constant.

A pressure resistent vessel 120, having perforations 121 on its area facing towards the bottom of the container is embedded in the carbon bed 11 and is disposed adjacent the bottom of the container 4. The vessel 120 forms inlet and outlet for steam and air, respectively, as well as distribution space for said fluids.

An exhaust air closure valve 32 and an air inlet valve 30 are connected to the conduit 23. Furthermore, a condensate outlet conduit 21 may be connected to the lowest point of the container 4. The conduit 21 may be made as a water trap and adapted for discharging condensate from the container under the action of fan pressure. A shut-off valve can be arranged in the conduit 21.

A sensor 33, sensing the content of solvent in the exhaust air departing through the valve 32, can be arranged to initiate a desorbing phase, such as will be described below.

The inlet pipe 5 is closed to its surroundings at its outer end, but via an outlet 9 may be connected to a separation means 10, with the aid of which solvent and water are separated. Water separated off is taken through a conduit 112 into the lower zone of the container 4. Separated solvent is collected for reuse, possibly after reconstitution.

The operation of the apparatus is as follows. Exhaust air with a relatively low content of solvent is taken to the filter 2, via the fan 3 to the inlet pipe 5 and passes round the pipe coil 15 out into the distribution zone 61, from where it passes through the carbon bed 11 to the vessel 120, and subsequently departs via the conduit 23 through the open valve 32. In this situation the pump 18 is active and urges cooling water through the coil 15 so that the air current is cooled to a predetermined low level before it flows into the zone 61. No deposition proper of the solvent on the pipe coil 15 occurs, but the cooled air stream affords cooling of the carbon bed 11, whereby the ability of the latter to adsorb solvent is substantially increased. When the sensing means 33 senses a solvent concentration exceeding a predetermined value, an automatic closure of the valve 32 may be arranged, for providing automatic activation of a steam source (not shown) and opening of the steam valve 30. Steam will thus come via the conduit 23 into the vessel 120 and further through the perforations 121 and through the bed 11. Solvent which was adsorbed in the bed 11 is thus desorbed and solvent vapor together with possible water vapor will then migrate upwards into the distribution zone 61 for cooling and condensing on the pipe coil 15. The condensate is collected in the trough 8 and taken away via the waste pipe 9 to the separating means 10.

The maintenance of an appropriate cooling effect for the cooling coil 15 is ensured with the aid of the sensing means 19.

As soon as the desorbing phase is terminated, the steam source is disconnected, valve 30 is closed and valve 32 is opened, so that solvent entrained in the exhaust air may start being absorbed in the bed.

The separation means 10 includes a valve 110 at the junction between conduit 9 and reflux conduit 112. The valve 110 is controlled by a temperature sensor 102 in the upper distribution zone 61. If the solvent (which is assumed miscible with the desorbing fluid, e.g. water) has a boiling point falling below that of water, the valve can be adapted to direct condensate through the outlet 110 of the conduit 9 when the sensed temperature is below that of the boiling point of water and exceeding the boiling point of the solvent. If the latter temperature is above $100^{\circ}$C a liquid can be utilized for desorbtion which has a boiling point exceeding that of the solvent. If the solvent is substantially immiscible to water, a conventional gravitational separator can be connected to the conduit 9, the waste pipe 112 then discharging the desorption liquid to the interior of the container 1.

Fig. 3 illustrates an embodiment of an apparatus in accordance with the invention, which corresponds to the embodiment according to Fig. 1 in all essentials. The differences are principally in relation to the embodiment of the pipe coil, condensate collection receptacle and the vessel 120.

The apparatus according to Fig. 1 is implemented in principle as a lying cylindrical container. The apparatus according to Fig. 3 is, on the other hand, implemented as a standing cylindrical container. The condensate collection receptacle in Fig. 3 is formed as a rotationally symmetric inner shell connected to the upper part of the container 4. A flange 48 is hereby connected to the cylindrical sweep of the container 4 to define a collection trough. The pipe coil is formed as a helical pipe coil 55 concentric with the axis of the container 4, said coil being placed in the space between the flange 48 and the sweep of the container 4. A cover 40 is arranged to direct incoming exhaust air flow towards the pipe coil 55, and an annular gap 46 allows the introduction of the cooled exhaust air flow into a distribution zone 61 above the carbon bed 11. The vessel 120 is formed as an annularly curved pipe.

The apparatus according to Fig. 3 otherwise corresponds to the embodiment illustrated in Fig. 1, and described in conjunction therewith.

Fig. 4 schematically illustrates two apparatuses according to Fig. 3 connected in parallel. In normal practical operation, such a parallel or tandem connection is usually utilized.

The apparatus according to Fig. 4 requires no closure valve between the fan 3 and inlet conduits 37, and it will be noted that the steam taken in during the desorbing phase cannot be put under pressure, since the bed 11, the fan 3 and the filter 1 do not offer any substantial resistance. The containers 4 therefore do not need to be formed as pressure vessels, and in principle only need to be dimensioned to withstand the pressure exercised by the weight of the carbon bed 11.

In the normal operation of a plant according to Fig. 4, only one container is coupled for adsorption, while the other is subjected to desorption, or merely stands ready to assume the adsorption function when the need of desorption occurs in the container in operation.

When the need of desorption occurs in one container, the exhaust air valve is closed and the steam inlet valve is opened. The volume of air in this container will then be urged out of it before the content of solvent in this air has succeeded in being adsorbed in the bed. This volume of air will then be urged via the air inlet conduit 37 and through the air inlet conduit 37 of the second container so that this air will be cleaned in the second container, which has just been taken into operation for the purpose of adsorption. There is thus avoided that said volume of air is urged out through the condensate outlet 9 to stir the function of it, or to cause contamination of the surroundings.

At cylindrical lying containers the vessel 120 has to advantage the shape of a tube which lies in parallel with the container axis and embedded in the carbon bed at a small distance from the container bottom. Preferably the perforations 121 are arranged at the lower part of the tube 120, whereby two effects are achieved, namely partly that the tube 120 then, together with the container bottom forms a water lock such that possibly existing water/condensate on the container bottom can be treated with through--bubbling steam, partly that the steam is distributed in an advantagous way over the cross-section of the carbon bed.

In the case with a standing cylindrical container the tube 120 is suitably embedded in the carbon bed 11 at a small distance from the container bottom, the perforations preferably being arranged on the lower portion of the tube 120. The tube is then arranged curved substantially to the shape of a ring which is coaxial with the container.

The same effects as in the previous embodiment are achieved.

As the container now has not to be made as a pressure vessel, but substantially only has to stand the forces developed by the weight of the carbon bed and the environment prevailing in the container, the container can now be made of cured plastics, internally plastics coated or painted thin sheet metal or the like, which means an extreme reduction of the costs for the device.

By pressure resistant construction of the vessel 120 is meant that the vessel shall be designed to stand the full pressure of steam which is introduced into the vessel from an external steam boiler if the perforations 120 of the vessel are clogged.

CLAIMS

1. Apparatus for recovering solvent entrained in an air stream, including a container (4) with an inlet (37) and an outlet (23) for the air stream, the container being provided with a bed (11) of active carbon, and with an inlet for taking in steam through the bed in counterflow to the through-airflow for desorbing the solvent, cooling means connected to the air inlet side of the container (4) for condensing desorbed solvent vapor and steam, and a closure valve (32) for closing the air outlet of the container (4) during the desorbing phase, characterized in that the cooling means (15,45) for condensing desorbed solvent and steam, is arranged in the air inlet ducing of the apparatus upstreams of the carbon bed (11), and that the cooling means comprises a cooling coil (15,55) which is arranged above a condensate collection receptacle (8,48) to which a conduit is connected for discharging condensate to a separation means (10) for separating solvent from water.

2. Apparatus according to claim 1, characterized in that the cooling means extends into the container.

3. Apparatus according to claim 1 or 2, characterized in that the terminal portion of said ducting extends substantially horizontally and is arranged to form said receptacle.

4. Apparatus according to anyone of claims 1-3, characterized in that the cooling means is adapted to cool the air passing into the container.

5. Apparatus according to anyone of claims 1-4, characterized in that the water outlet of the separation means is connected to the interior of the container.

6. Apparatus according to claim 5, characterized in that the steam inlet to the container is located at the bottom of the container, whereby steam will heat possible water on the container bottom to drive off solvent therefrom.

7. Apparatus according to claim 6, characterized in that the container has a water drain line for discharging water from the container bottom.

Fig.1

Fig.2

Fig.3

Fig.4